Europäisches Patentamt

(19) **European Patent Office**

**Office européen des brevets**

(11) Numéro de publication: **0 241 970 B1**

(12) **FASCICULE DE BREVET EUROPEEN**

(45) Date de publication du fascicule du brevet: **05.07.89**

(51) Int. Cl.⁴: **B64G 1/00**

(21) Numéro de dépôt: **87200559.0**

(22) Date de dépôt: **24.03.87**

(54) **Procédé et dispositif pour developper une enveloppe autour d'un objet, notamment un satellite.**

(30) Priorité: **08.04.86  FR 8605097**

(43) Date de publication de la demande:
**21.10.87 Bulletin 87/43**

(45) Mention de la délivrance du brevet:
**05.07.89 Bulletin 89/27**

(84) Etats contractants désignés:
**BE CH DE ES FR GB GR IT LI LU NL**

(56) Documents cités:
**US-A- 4 166 597**
**US-A- 4 166 598**
**US-A- 4 314 682**
**US-A- 4 504 031**

(73) Titulaire: **CENTRE NATIONAL D'ETUDES SPATIALES (C.N.E.S.) Etablissement public, scientifique et, technique à caractère industriel et commercial 2, place Maurice-Quentin, F-75039 Paris Cédex 01(FR)**

(72) Inventeur: **Regipa, Robert, 226 avenue Saint-Exupéry Bâtiment Provence, F-31400 Toulouse(FR)**

(74) Mandataire: **Barre, Philippe, Cabinet Barre-Gatti-Laforgue 95 rue des Amidonniers, F-31069 Toulouse Cédex(FR)**

## Description

L'invention concerne un procédé permettant de développer une enveloppe étanche autour d'un objet. Elle s'étend à un dispositif permettant la mise en oeuvre de ce procédé.

Actuellement, lorsqu'on envisage le déploiement d'une enveloppe liée à une structure par un de ses pôles, ce déploiement est réalisé de façon que cette enveloppe s'étende en totalité dans le prolongement de cette structure. Ainsi, seule la face de la structure liée au pôle se trouve protégée par cette enveloppe. De la même manière, l'accès éventuel à l'intérieur du volume délimité par cette enveloppe ne peut se faire qu'à partir d'une seule face de la structure.

Le document US-A 4 504 031 décrit un procédé et un dispositif, respectivement, pour développer une enveloppe gonflable entourant partiellement un véhicule spatial et servant de dispositif de freinage pendant la rentrée du véhicule dans l'atmosphère.

La présente invention se propose d'indiquer un procédé permettant de développer automatiquement une enveloppe étanche autour d'un objet, notamment un objet soumis à des forces aérodynamiques relativement faibles, tel qu'un satellite en phase orbitale.

Un autre objectif de l'invention est de permettre la réalisation d'une structure rigide, radialement autour d'un objet.

Un autre objectif est de fournir un dispositif de faible encombrement et de poids réduit, facilement transportable en vue de la mise en oeuvre du procédé précité.

Le procédé conforme à l'invention pour le développement d'une enveloppe étanche autour d'un objet consiste :

(a) dans une phase préalable :
- à envelopper l'objet d'une enveloppe étanche se présentant à l'état dégonflé,
- à relier une zone, dite pôle, de cette enveloppe avec l'objet par l'intermédiaire d'un mât de liaison susceptible de pouvoir présenter deux positions extrêmes :
. une position repliée où il maintient le pôle de l'enveloppe sensiblement contre l'objet,
. une position déployée où il maintient le pôle de l'enveloppe, à distance, en regard de l'objet,
. ledit mât de liaison se trouvant initialement dans sa position repliée,
(b) dans une phase ultérieure de développement :
à engendrer le déploiement du mât entre sa position repliée et sa position déployée,
. à gonfler l'enveloppe jusqu'à l'obtention de son état de plénitude.

Ce procédé permet donc de déployer à tout moment et automatiquement une enveloppe étanche autour d'un objet. Dans ce but, il peut être utilisé des moyens embarqués de gonflage dont la capacité est, par exemple, calculée de façon à permettre l'obtention de l'état de plénitude de l'enveloppe.

En outre, dans cet état de plénitude, l'enveloppe se trouve centrée sur l'objet grâce à la présence du mât de liaison, et ses réactions sont par conséquent les mêmes que celles de l'objet.

Toutefois, afin de permettre d'accéder à l'objet et d'éviter la détérioration de l'enveloppe avant la phase de développement, le procédé consiste préférentiellement dans la phase préalable :
- à utiliser une enveloppe, dite interne, de forme allongée, ayant deux pôles opposés à chacune de ses extrémités, à retrousser ladite enveloppe sur elle-même et à la plier longitudinalement en accordéon dans cette position retroussée,
- à solidariser le pôle de l'enveloppe se trouvant dans la partie retroussée sur l'objet et à relier l'autre pôle de l'enveloppe audit objet par l'intermédiaire d'un mât de liaison de longueur inférieure à ladite enveloppe, se trouvant dans sa position repliée.

L'utilisation d'une enveloppe retroussée sur elle-même puis pliée longitudinalement en accordéon, permet de la déployer autour de l'objet alors qu'initialement cette enveloppe se trouve intégralement positionnée d'un seul côté de cet objet.

Cette enveloppe et le mât de liaison peuvent donc être initialement intégrés à l'intérieur d'un container garantissant leur protection. En outre, une seule zone de l'objet se trouve condamnée par la présence de l'enveloppe repliée et il est donc possible d'intervenir sur celui-ci jusqu'au moment du développement de cette enveloppe.

Il convient de noter que ce développement ne peut être commandé que lorsque les forces aérodynamiques auxquelles est soumis l'objet sont relativement faibles. Ceci est notamment le cas pour un satellite se trouvant en phase orbitale, ou un engin circulant à faible altitude au-dessus de la surface terrestre.

L'enveloppe interne utilisée est préférentiellement une enveloppe de forme générale allongée cylindrique ayant une section de taille supérieure à celle de l'objet de façon à permettre son coulissement le long de l'objet. En outre, selon une autre caractéristique de l'invention, cette enveloppe peut être associée à une deuxième enveloppe, le procédé consistant alors :

(a) dans la phase préalable :
- à utiliser une deuxième enveloppe, dite externe, de volume supérieur, à l'enveloppe interne et possédant un pôle ouvert de forme annulaire,
- à enfiler partiellement, en la plissant, l'enveloppe externe autour de l'enveloppe interne, avant pliage de celle-ci, de façon que le pôle annulaire de ladite enveloppe externe soit fixé sur la périphérie de l'enveloppe interne à distance de ses pôles, l'autre pôle de l'enveloppe externe étant commun au pôle de l'enveloppe interne destiné à être fixé sur le mât de liaison,
- à retrousser, puis à plier ensemble longitudinalement en accordéon les deux enveloppes ainsi associées,
- à solidariser un des pôles de l'enveloppe interne sur l'objet et à relier le pôle commun des enveloppes interne et externe audit objet par l'intermédiaire du mât de liaison se trouvant dans sa position repliée,

(b) dans la phase de développement :
. à engendrer le déploiement du mât de liaison,
. à gonfler l'enveloppe interne jusqu'à son état de plénitude où elle se trouve développée autour de l'objet,
. à poursuivre le gonflage jusqu'à rupture de la paroi périphérique extérieure de l'enveloppe interne,
. à gonfler l'enveloppe externe jusqu'à son état de plénitude.

Cette enveloppe externe permet de dégager un volume beaucoup plus important autour de l'objet. De plus, comme on le verra plus loin, elle permet la création d'un volume protégé dont l'objet est le centre, ce volume étant accessible à partir de toutes les faces de cet objet.

La rupture de l'enveloppe interne est généralement permise par l'utilisation d'une enveloppe de forme cylindrique entourée d'un réseau de renforts circonférentiels répartis sur la hauteur de celle-ci de façon à lui conférer une structure lobée.

En effet, au-dessus d'une pression relative donnée, les lobes de l'enveloppe se déchirent permettant un gonflage rapide de l'enveloppe externe sans nécessiter de jets de gaz à haute pression.

Le mât de liaison peut lui aussi être constitué d'un ballon de forme allongée possédant un pôle fixé sur l'objet et un pôle commun aux pôles communs des enveloppes interne et externe. Il convient de noter l'importance primordiale de ce ballon de liaison qui, par sa présence, permet d'obtenir la forme d'équilibre de l'enveloppe interne, retroussée, dans laquelle celle-ci se trouve développée autour de l'objet. En effet, sans la présence du ballon de liaison, cette enveloppe interne se déploierait entièrement dans le prolongement de l'objet.

Ce ballon de liaison, soumis à des contraintes importantes, est préférentiellement de forme allongée cylindrique et est pourvu d'un réseau de renforts circonférentiels.

En outre, il est doté d'un lien interpolaire s'étendant axialement entre les pôles de ce ballon. Il est ainsi possible de gonfler ce ballon jusqu'à la rupture de son enveloppe extérieure, le lien interpolaire assurant ensuite la reprise des efforts de tension auxquels était soumis ce ballon.

La suppression de ce ballon présente l'avantage de permettre l'accès à l'intérieur du volume délimité par l'enveloppe externe. Afin de permettre cet accès à partir de l'une quelconque des faces de l'objet, on peut de même procéder à la destruction totale de l'enveloppe interne. Toutefois, préalablement à cette destruction, il convient de disposer une pièce polaire hermétique au niveau du pôle annulaire ouvert de l'enveloppe externe.

Ces différentes opérations permettent donc de créer une structure radiale autour de l'objet, accessible depuis toutes les faces de cet objet. Cette structure de grand volume peut notamment constituer un espace de travail dont un satellite se trouve être le noyau central et fournir des conditions de travail à l'abri des diverses agressions extérieures.

Selon une autre caractéristique de l'invention, il est possible de créer une structure rigide en utilisant une enveloppe externe double paroi, entre les parois de laquelle on injecte une mousse rigidifiante. Dans ce dernier cas, les pôles de cette enveloppe peuvent être reliés à deux faces opposées de l'objet par l'intermédiaire de deux mâts rigides, aptes à travailler en compression et en tension, et à assurer par là-même la reprise des efforts sollicitant la structure réalisée.

La présente invention s'étend à un dispositif destiné à être solidarisé à un objet en vue de la mise en oeuvre du procédé décrit précédemment ; ce dispositif comprend un container destiné à être solidarisé avec ledit objet et contenant :
- un mât de liaison possédant une extrémité solidaire du container et adapté pour pouvoir présenter deux positions extrêmes :
une position repliée où il est replié à l'intérieur du container,
une position déployée où il s'étend à l'extérieur du container,
- une première enveloppe, dite interne, cylindrique possédant un pôle solidaire du container et un pôle solidaire de l'extrémité du mât de liaison, ladite enveloppe interne étant pliée en accordéon dans le container dans une position retroussée,
- une deuxième enveloppe, dite enveloppe externe, enfilée partiellement autour de l'enveloppe interne, avant pliage de celle-ci et possédant un pôle annulaire ouvert solidaire de la paroi périphérique de ladite enveloppe interne et un pôle solidaire de l'extrémité du mât de liaison,
- des moyens de gonflage adaptés pour permettre le gonflage successif de l'enveloppe interne et de l'enveloppe externe.

L'invention exposée ci-dessus dans sa forme générale sera mieux comprise à la lecture de la description détaillée qui suit et à l'examen des dessins annexés qui en présentent à titre d'exemple non limitatif un mode de mise en oeuvre préférentiel ; sur ces dessins qui font partie intégrante de la présente description :

- les figures 1a, 1b et 1c illustrent schématiquement le mode de pliage des enveloppes utilisées pour la mise en oeuvre du procédé conforme à l'invention,
- les figures 2, 3, 4, 5, 6, 7 sont des vues en coupe schématiques illustrant le déroulement du procédé de développement d'une enveloppe étanche autour d'un objet, conformément à l'invention.

Ce procédé nécessite, en premier lieu, un mât ou ballon 2, dit mât ou ballon de liaison, qui est réalisé en assemblant des fuseaux rectangulaires, par tout procédé connu, tel que par exemple décrit dans la demande de brevet français n° 80.00343 (EP-A 0 031 981) au nom du demandeur, le long de leurs bords rectilignes. Ce ballon comporte ainsi une portion cylindrique qui se prolonge par des portions extrêmes froncées dont les bords sont rattachés à des pièces polaires 3 et 4 disposées aux pôles du ballon sur l'axe de celui-ci.

Le matériau constitutif est un matériau composite étanche à l'air, possédant, par exemple, une trame en polyester disposée dans le sens circonférentiel et une chaîne en "Kevlar" disposée dans le sens longitudinal. Il possède ainsi une résistance dissymétrique plus élevée dans le sens longitudinal que dans le sens circonférentiel.

Ce ballon est entouré d'un réseau de renforts circonférentiels 5 et d'un réseau de renforts longitudinaux 6. Chacun de ces renforts est réalisé en un matériau inextensible de haute résistance, par exemple "Kevlar".

Par ailleurs, les pièces polaires 3 et 4 sont réunies par un lien interpolaire 7 inextensible s'étendant le long de l'axe du ballon ; ce lien 7 peut également être constitué d'un faisceau de bandes en un matériau inextensible de haute résistance, notamment "Kevlar".

La structure de ce ballon 2, conforme au ballon décrit dans la demande de brevet français n° 84.18798 (EP-A 0 184 262) au nom du demandeur, permet de le gonfler à des surpressions élevées, les efforts de tension étant repris par le lien interpolaire 7, le réseau longitudinal 6 et le réseau circonférentiel 5.

En deuxième lieu, le procédé nécessite, pour sa mise en oeuvre, une enveloppe 8, dite enveloppe interne de volume et de longueur supérieurs au volume du ballon de liaison 2. Cette enveloppe première 8 est fabriquée de manière analogue au ballon de liaison par assemblage de fuseaux rectangulaires. Ces fuseaux sont réunis et fixés, au niveau d'une de leur extrémité, sur une des pièces polaires 3 du ballon de liaison 2 et au niveau de leur extrémité opposée sur une autre pièce polaire 9.

Cette enveloppe première 8 possède la même structure que le ballon de liaison 2 si l'on excepte le lien interpolaire 7 qui est supprimé.

En dernier lieu, le procédé nécessite une deuxième enveloppe 10, dite enveloppe externe, de volume supérieur à l'enveloppe première 8. Cette enveloppe 10 est également fabriquée de manière analogue au ballon de liaison 2 par assemblage de fuseaux rectangulaires.

Cette enveloppe externe 10 est enfilée partiellement autour de l'enveloppe interne 8 ; une des extrémités des fuseaux la composant est alors fixée sur la pièce polaire 3 commune au ballon de liaison 2 et à l'enveloppe interne 8.

Cette envelope externe 10 est ensuite plissée longitudinalement jusqu'à ce que l'extrémité opposée des fuseaux se trouve à distance des pôles 3, 9 de l'enveloppe interne 8 en regard d'une zone de renfort 11 circonférentielle de cette enveloppe interne. L'extrémité des fuseaux est alors fixée sur cette zone renforcée 11 par tout moyen connu tel que couture ou thermocellage ; l'assemblage est finalement renforcé au moyen de renforts circonférentiels 12, tels que des câbles en kevlar, qui assurent un frettage de cet assemblage.

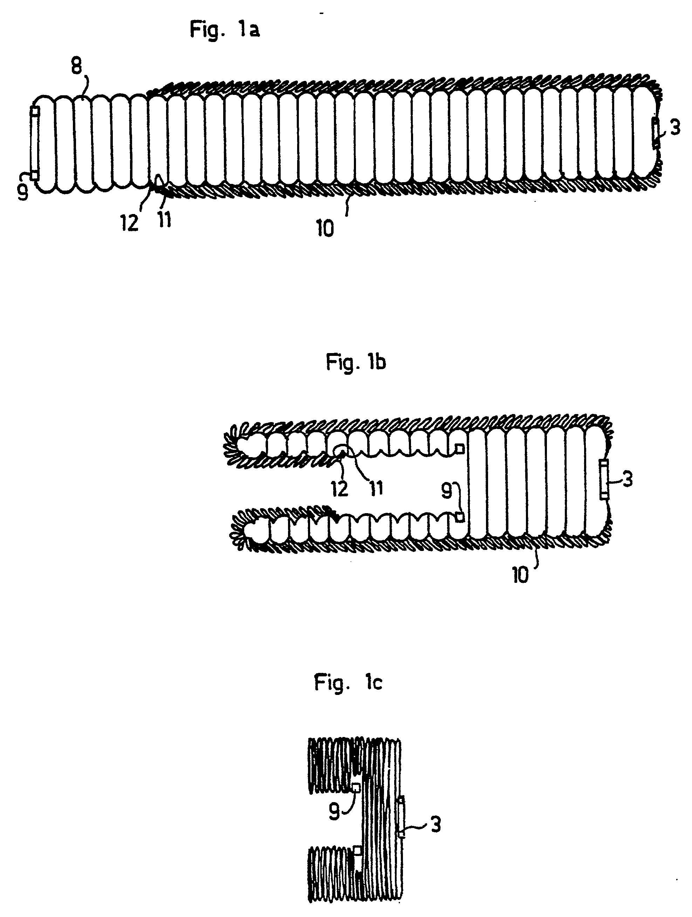

Les enveloppes interne 8 et externe 10 étant ainsi associées (figure 1a), l'enveloppe interne 8 est alors retroussée sur elle-même (figure 1b), puis ces deux enveloppes sont pliées longitudinalement en accordéon en respectant la position retroussée de l'enveloppe interne (figure 1c). Le ballon de liaison 2 est quant à lui plié longitudinalement de façon classique.

L'ensemble constitué par le ballon de liaison 2 et les enveloppes interne 8 et externe 10 est ensuite intégré à l'intérieur d'un container 13 ; les pôles 4, 9 respectifs du ballon de liaison 2 et de l'enveloppe interne 8 sont quant à eux solidairisés à une des parois de ce container 13.

Il convient de noter que par container, on entend définir tout compartiment adapté pour loger le ballon de liaison et les deux enveloppes. Il est bien entendu que ce compartiment peut être constitué d'un élément séparé destiné à être fixé sur l'objet ou d'un élément, tel qu'une soute, ménagé directement à l'intérieur de cet objet.

A l'intérieur de ce container 13 sont également intégrés des moyens de gonflage, non représentés, du ballon de liaison 2 et des deux enveloppes 8, 10.

Ces moyens de gonflage sont dotés de moyens d'alimentation communiquant avec l'intérieur du ballon de liaison 2 et qui permettent une admission d'air comprimé provenant d'un turbo-compresseur (ou tout autre moyen équivalent) à travers un conduit.

Associés à ces moyens de gonflage, des moyens de contrôle permettent de mesurer la pression relative à l'intérieur du ballon de liaison 2. Ces moyens de contrôle sont adaptés pour engendrer, pour une pression de consigne donnée, le déclenchement d'un séquenceur qui commande l'obturation du conduit alimentant le ballon de liaison 2 et l'ouverture d'un conduit dérivé communiquant avec l'intérieur de l'enveloppe interne 8.

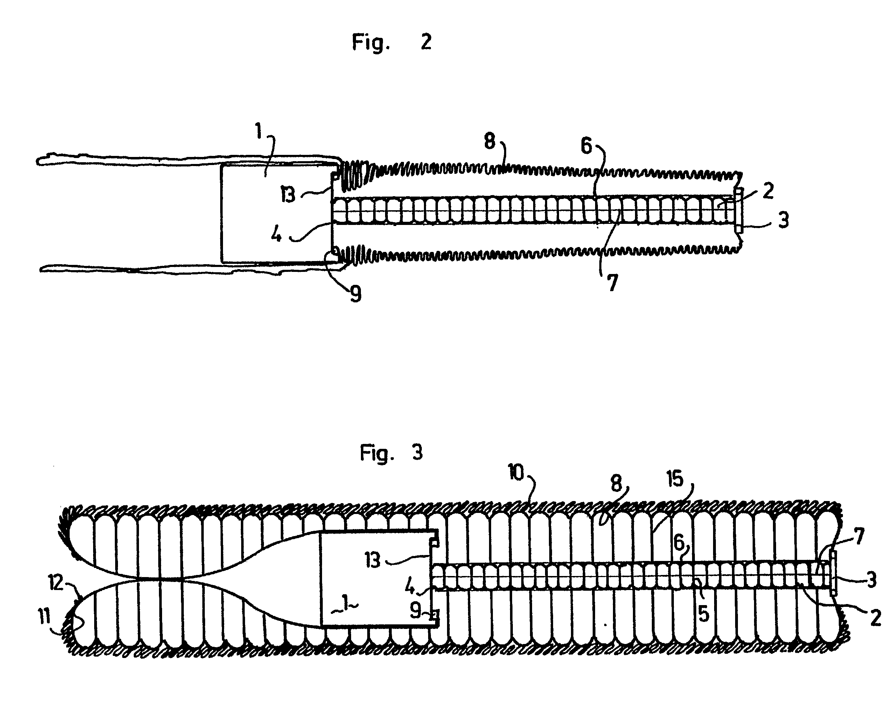

Les différentes caractéristiques du ballon 2, des deux enveloppes 8, 10 et des moyens de gonflage ayant été décrites, on va indiquer ci-après le déroulement des opérations de développement de ces enveloppes autour d'un objet 1, en référence aux figures 2 à 7.

Le ballon de liaison 2 et les deux enveloppes 8, 10 sont logés à l'état dégonflé à l'intérieur du container 13 destiné à être solidarisé sur une face de l'objet 1. Un des pôles 4, 9 du ballon de liaison 2 et respectivement de l'enveloppe interne 8 est, comme cité ci-avant, solidarisé à une des parois du container 13.

Il convient de noter que ce container 13 qui contient également les moyens de gonflage, est de dimensions et d'un poids relativement faibles, étant donné le peu d'encombrement des différentes enveloppes à leur état dégonflé.

Les moyens de gonflage permettent, dans un premier temps, le gonflage du mât de liaison 2 jusqu'à l'obtention de son état de plénitude où il se trouve développé dans le prolongement de l'objet 1. Dans cet état de plénitude, ce ballon de liaison 2 permet de maintenir le pôle commun 3 des enveloppes interne 8 et externe 10 à distance de l'objet 1 (figure 2).

Au-delà d'une pression supérieure à une pression de consigne donnée, le séquenceur associé aux moyens de gonflage coupe l'alimentation en air de ce ballon 2 et active le remplissage de l'enveloppe interne 8.

Au cours de ce remplissage, la partie de l'enveloppe interne 8 se trouvant dans le prolongement de l'objet 1 se gonfle dans un premier temps, jusqu'à son état de plénitude. Dans un deuxième temps, de par sa position retroussée et la présence du ballon de liaison 2, cette enveloppe interne 8 se développe le long de l'objet 1 et finalement dans le prolongement de la face de cet objet opposée au ballon de liaison 2.

Il est à noter que la section de cette enveloppe interne 8 doit être de taille supérieure à celle de l'objet, de façon à permettre son coulissement le long de cet objet 1.

Dans son état de plénitude, l'enveloppe interne 8 se trouve donc développée autour de l'objet 1 (figure 3).

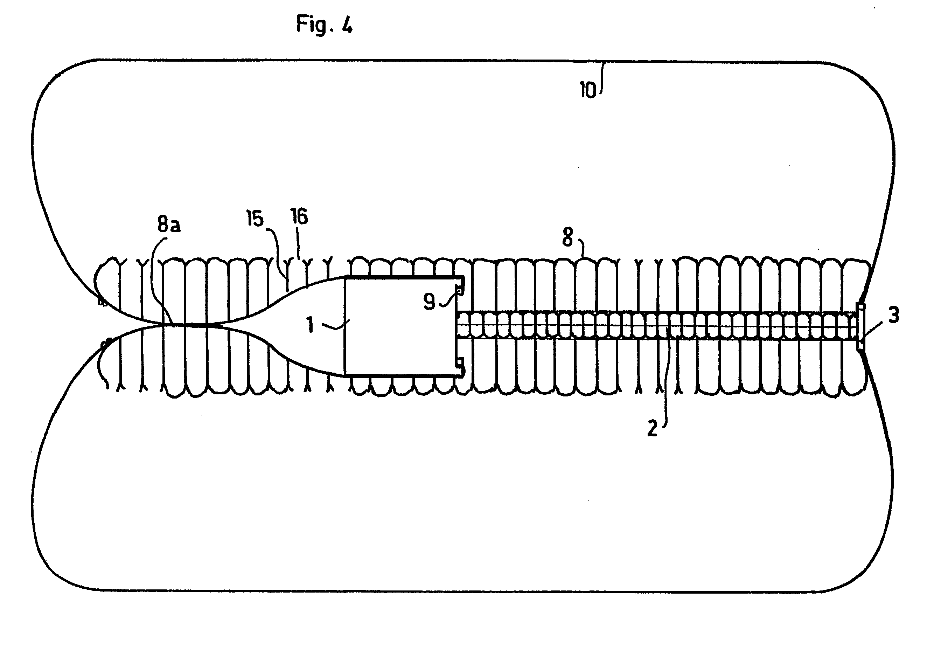

Le gonflage est alors poursuivi jusqu'à obtenir le déchirement des lobes apparaissant entres les renforts circonférentiels 15 de cette enveloppe ; l'enveloppe externe 10 est alors gonflée rapidement au moyen de l'air circulant dans les ouvertures 16 libérées par le déchirement des lobes, et ce jusqu'à l'obtention de son état de plénitude (figure 4).

La reprise des efforts de tension s'exerçant sur cette structure développée est alors assurée par le ballon de liaison 2 qui donne à cet ensemble une bonne rigidité en traction et en flexion. Il convient de noter que ce ballon de liaison 2 peut être remplacé par un mât de liaison rigide, rétractable.

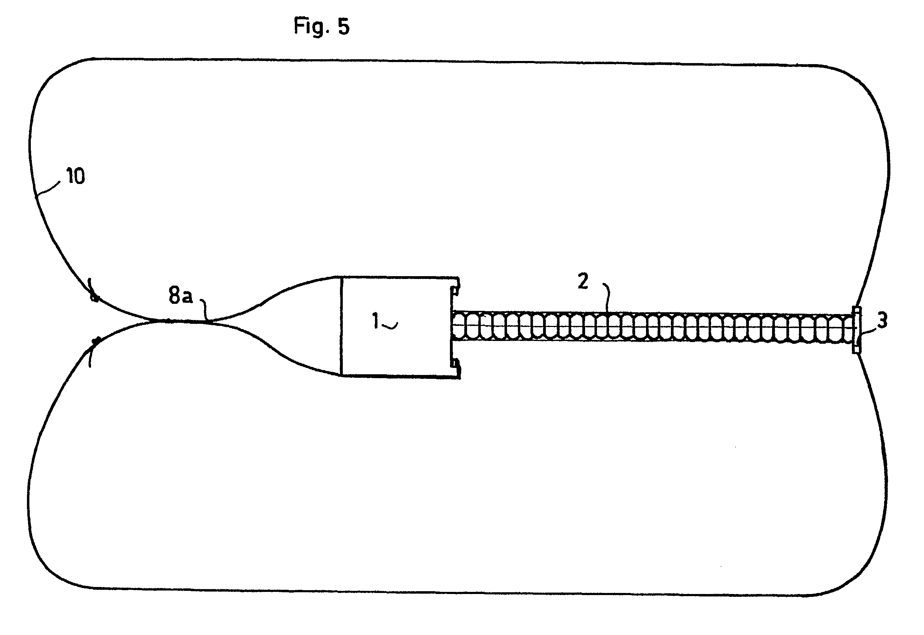

La destruction de l'enveloppe interne 8 peut ensuite être poursuivie jusqu'à faire disparaître entièrement la partie extérieure de cette enveloppe. Seule subsiste alors la partie 8a reliant l'objet 1 au pôle de l'enveloppe externe 10, opposé au ballon de liaison 2 (figure 5).

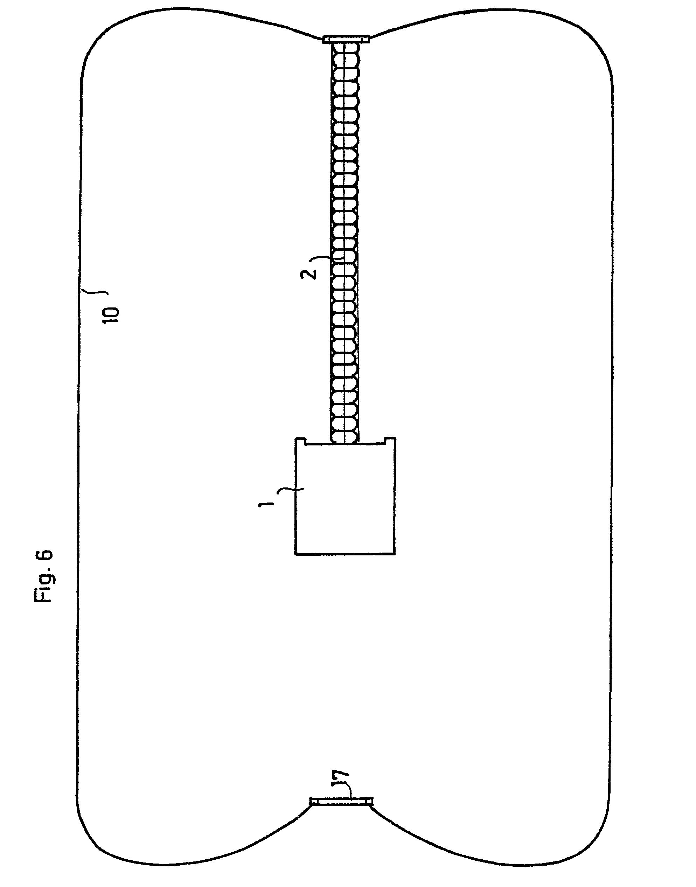

Par la suite, afin de libérer le volume occupé par cette dernière partie 8a d'enveloppe interne 8, le pôle précité de l'enveloppe externe 10 est muni d'une pièce polaire 17 hermétique destinée à assurer l'étanchéité de la structure, puis l'enveloppe interne 8 est totalement détruite (figure 6).

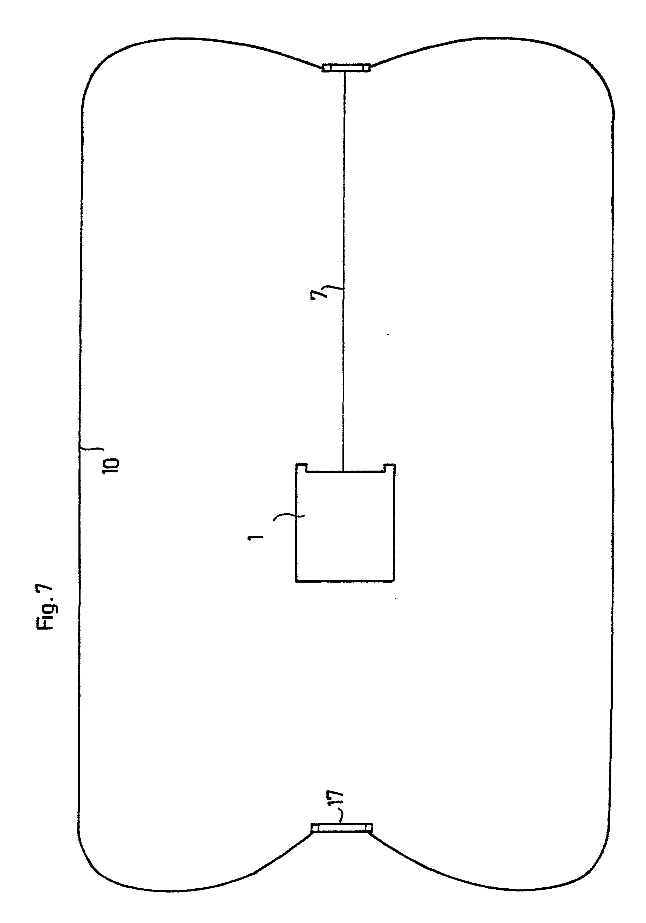

On obtient finalement une libération de la totalité du volume autour de l'objet, en gonflant le mât de liaison 2 jusqu'à rupture des lobes apparaissant entre les renforts circonférentiels 5. La reprise des efforts de tension et la rigidité de la structure sont alors assurés par le lien interpolaire 7 de ce ballon de liaison 2 (figure 7).

La structure finale obtenue est donc une structure radiale développée autour de l'objet. En outre, ce volume est accessible depuis toutes les faces de l'objet.

L'enveloppe externe 10 de cette structure peut également être rigidifiée en utilisant une enveloppe double paroi et en injectant une mousse rigidifiante dans l'intervalle compris entre ces deux parois.

Cette dernière possibilité permet de créer un volume à l'intérieur duquel ne règne aucune surpression à condition de positionner deux mâts rigides reliant chaque pôle de l'enveloppe externe à une face de l'objet.

**Revendications**

1/ - Procédé pour développer une enveloppe étanche autour d'un objet (1), caractérisé en ce qu'il consiste :

(a) dans une phase préalable :
- à envelopper l'objet (1) d'une enveloppe étanche (8) se présentant à l'état dégonflé,
- à relier une zone (9) de cette enveloppe, dite pôle, avec l'objet par l'intermédiaire d'un mât de liaison (2) susceptible de pouvoir présenter deux positions extrêmes :
. une position repliée où il maintient le pôle (9) de l'enveloppe (8) sensiblement contre l'objet (1),
. une position déployée où il maintient le pôle (9) de l'enveloppe (8), à distance, en regard de l'objet (1),
. ledit mât de liaison (2) se trouvant initialement dans sa position repliée,

(b) dans une phase ultérieure de développement :
. à engendrer le déploiement du mât (2) entre sa position repliée et sa position déployée,
. à gonfler l'enveloppe (8) jusqu'à l'obtention de son état de plénitude.

2/ - Procédé selon la revendication 1, caractérisé en ce que, dans la phase préalable, il consiste :
- à utiliser une enveloppe (8), dite interne, de forme allongée ayant deux pôles (3, 9) opposés à chacune de ses extrémités, à retrousser ladite enveloppe sur elle-même, et à la plier longitudinalement, en accordéon, dans cette position retroussée,
- à solidariser le pôle (9) de l'enveloppe interne se trouvant dans la partie retroussée sur l'objet (1) et à relier l'autre pôle (3) de l'enveloppe (8) audit objet par l'intermédiaire d'un mât de liaison (2), de longueur inférieure à ladite enveloppe, se trouvant dans sa position repliée.

3/ - Procédé selon la revendication 2, caractérisé en ce que l'on utilise une enveloppe (8) interne de forme générale allongée cylindrique ayant une section de taille supérieure à celle de l'objet de façon à permettre son coulissement le long dudit objet (1).

4/ - Procédé selon la revendication 3, caractérisé en ce qu'il consiste :

(a) dans la phase préalable :
- à utiliser une deuxème enveloppe (10), dite externe, de volume supérieur à l'enveloppe interne et possédant deux pôles à chacune de ses extrémités, un desdits pôles étant ouvert et de forme annulaire,
- à enfiler partiellement, en la plissant, l'enveloppe externe (10) autour de l'enveloppe (8) interne, avant pliage de celle-ci, de façon que le pôle annulaire de ladite enveloppe externe (10) soit fixé sur la périphérie de l'enveloppe interne (8) à distance de ses pôles (3, 9), l'autre pôle de l'enveloppe externe étant commun au pôle (3) de l'enveloppe interne (8) destiné à être fixé sur le mât de liaison (2),
- à retrousser, puis à plier ensemble longitudinalement, en accordéon, les deux enveloppes (8, 10) ainsi associées,
- à solidariser un des pôles (9) de l'enveloppe interne sur l'objet et à relier le pôle (3) commun des enveloppes interne (8) et externe (10) audit objet par l'intermédiaire du mât de liaison (2) se trouvant dans sa position repliée,

(b) dans la phase de développement :
. à engendrer le déploiement du mât de liaison (2),
. à gonfler l'enveloppe interne (8) jusqu'à son état de plénitude où elle se trouve développée autour de l'objet (1),

. à poursuivre le gonflage jusqu'à rupture de la paroi périphérique extérieure de l'enveloppe interne (8),

. à gonfler l'enveloppe externe (10) jusqu'à son état de plénitude.

5/ - Procédé selon la revendication 4, caractérisé en ce que l'on utilise une enveloppe interne (8) de forme cylindrique entourée d'un réseau de renforts circonférentiels (15) répartis sur la hauteur de celle-ci de façon à lui conférer une structure lobée, la rupture de ladite enveloppe étant obtenue par déchirement des lobes apparaissant entre les renforts circonférentiels (15).

6/ - Procédé selon l'une des revendications 4 ou 5, caractérisé en ce que :
- on utilise une enveloppe interne (8) dotée d'une zone (11) renforcée circonférentielle, à distance de ses pôles (3, 9),
- on assemble le pôle annulaire de l'enveloppe externe (10) sur ladite zone renforcée de l'enveloppe interne (8),
- et on réalise un frettage dudit assemblage par des renforts circonférentiels (12).

7/ - Procédé selon la revendication 4, caractérisé en ce que l'on utilise un mât de liaison (2) constitué d'un ballon de forme allongée et possédant un pôle (4) fixé sur l'objet et un pôle (3) commun aux pôles communs des enveloppes interne (8) et externe (10).

8/ - Procédé selon la revendication 7, caractérisé en ce que l'on utilise un ballon de liaison (2) de forme allongée cylindrique possédant une génératrice de haute résistance et pourvu d'un réseau de renforts circonférentiels (5).

9/ - Procédé selon l'une des revendications 7 ou 8, caractérisé en ce que l'on utilise un ballon de liaison (2) possédant un lien interpolaire (7) s'étendant axialement entre les pôles (3, 4) dudit ballon et en ce que l'on gonfle ce ballon jusqu'à rupture de son enveloppe.

10/ - Procédé selon la revendication 4, caractérisé en ce que l'on fixe, après gonflage de l'enveloppe externe (10) une pièce polaire (17) hermétique au niveau du pôle annulaire ouvert de ladite enveloppe externe et en ce que l'on détruit en totalité l'enveloppe interne (8).

11/ - Procédé selon la revendication 4, caractérisé en ce que l'on utilise une enveloppe externe (10) double paroi et en ce que l'on injecte, après gonflage de ladite enveloppe, une mousse rigidifiante dans l'espace compris entre lesdites parois de façon à créer une structure rigide autour de l'objet (1).

12/ - Procédé selon les revendications 9, 10 et 11 prises ensemble, caractérisé en ce qu'il consiste à disposer des mâts rigides aptes à travailler en compression et en traction entre l'objet (1) et les pôles de l'enveloppe externe (10), après destruction du ballon de liaison (2) et de l'enveloppe interne (8) et après rigidification de l'enveloppe externe.

13/ - Procédé selon l'une des revendications précédentes, caractérisé en ce qu'il consiste à développer une enveloppe autour d'un objet se trouvant en phase orbitale.

14/ - Dispositif destiné à être solidarisé à un objet (1) pour la mise en oeuvre du procédé conforme à l'une des revendications précédentes et caractérisé en ce qu'il comprend un container (13) destiné à être solidarisé avec ledit objet (1) et contenant :
- un mât de liaison (2) possédant une extrémité (4) solidaire du container et adapté pour pouvoir présenter deux positions extrêmes:
. une position repliée où il est replié à l'intérieur du container (13),
. une position déployée où il s'étend à l'extérieur du container (13),
- une première enveloppe (8) cylindrique, dite interne, possédant un pôle (9) solidaire du container (13) et un pôle (3) solidaire de l'extrémité du mât de liaison (2), ladite enveloppe interne étant pliée en accordéon dans le container, dans une position retroussée,
- une deuxième enveloppe (10), dite enveloppe externe enfilée partiellement autour de l'enveloppe interne (8) avant pliage de celle-ci et possédant un pôle annulaire ouvert solidaire de la paroi périphérique de ladite enveloppe interne et un pôle (3) solidaire de l'extrémité du mât de liaison (2),
- des moyens de gonflage adaptés pour permettre le gonflage successif de l'enveloppe interne (8) et de l'enveloppe externe (10).

15/ - Dispositif selon la revendication 14, caractérisé en ce que le mât de liaison (2) est constitué d'un ballon de forme générale allongée, sensiblement cylindrique, entouré d'un réseau de renforts circonférentiels (5).

16/ - Dispositif selon la revendication 15, caractérisé en ce que les moyens de gonflage comprennent:
- des moyens d'alimentation permettant le gonflage successif du ballon de liaison (2) et des enveloppes interne (8) et externe (10),
- des moyens de contrôle de la pression relative du ballon de liaison (2) adaptés pour stopper le gonflage dudit ballon et commander le gonflage de l'enveloppe interne (8) pour une pression relative du ballon de liaison (2) supérieure à une valeur de consigne donnée.

17/ - Dispositif selon l'une des revendications 14, 15 ou 16, comprenant une enveloppe interne (8) de forme cylindrique, entourée d'un réseau de renforts circonférentiels (15), ladite enveloppe interne comprenant une zone de renfort (11) circonférentielle à distance de ses pôles (3, 9) de façon à permettre la fixation du pôle annulaire de l'enveloppe externe (10).

18/ - Dispositif selon l'une des revendications 14, 15, 16 ou 17, caractérisé en ce qu'il comprend une enveloppe externe (10) possédant deux parois extérieures.

## Claims

1. Process for developing a sealed casing about an article (1), characterised in that it consists:
(a) in a preliminary phase:
    — in enveloping article (1) of a sealed casing (8) in the deflated state,
    — in connecting a zone (9) of said casing, a so-called pole, with the article by means of a connecting strut (2) capable of taking up two end positions:

. a folded position, in which it maintains pole (9) of casing (8) substantially against article (1),

. an extended position, in which it maintains pole (9) of casing (8) at a distance from article (1),

. said connecting strut (2) being initially in its folded position,

(b) in a further phase of development:

. in bringing about extension of strut (2) between its folded position and its extended position,

. in inflating casing (8) until its state of fullness is reached.

2. Process according to claim 1, characterised in that, in the preliminary phase, it consists:

– in making use of an elongated casing (8), a so-called inner casing, having two poles (3, 9) opposite one another at either end, in turning up said casing on itself, and in folding it longitudinally, in zigzag-form, in that turned-up position, in firmly linking pole (9) of the inner casing within the turned up part with article (1) and in linking the other pole (3) of casing (8) to said article with the aid of a connecting strut (2), which is shorter than said casing and in its folded position.

3. Process according to claim 2, characterised in that use is made of an inner casing (8) of generally elongated cylindrical form, which has a cross-section larger than that of the article so as to enable it to slide along said article (1).

4. Process according to claim 3, characterised in that it consists: (a) in the preliminary phase:

– in making use of a second casing (10), the so-called outer casing, the volume of which is larger than that of the inner casing and which has two poles at either of its ends, one of said poles being open and of annular form,

– in partially passing, while folding it, the outer casing (10) about inner casing (8) prior to folding of the latter, so that the annular pole of said outer casing (10) is attached to the periphery of inner casing (8) at a distance from its poles (3, 9), the other pole of the outer casing being common with pole (3) of inner casing (8) which is to be attached to connecting strut (2),

– in turning up and then jointly folding the two casings (8, 10) thus linked longitudinally and in zigzag form,

– in firmly attaching one of poles (9) of the inner casing to the article and in joining the common pole (3) of inner casing (8) and outer casing (10) with said article by means of connecting strut (2) in its folded position, (b) in the developing phase:

. in cuasing extensions of connecting strut (2),

. in inflating inner casing (8) to its state of fullness, where it is developed about article (1),

. in continuing the inflation process until the outer peripheral wall of inner casing (8) bursts,

. in inflating outer casing (10) to its state of fullness.

5. Process according to claim 4, characterised in that use is made of an inner casing (8) of cylindrical form surrounded by a network of circumferential reinforcements (15), which are distributed along the height of said inner casing so as to confer to it a structure of bulges, bursting of said casing being achieved by tearing bulges projecting between the circumferential reinforcements (15).

6. Process according to one of claims 4 to 5, characterised in that:

– use is made of an inner casing (8) provided with a circumferential reinforced zone (11) at a distance from its poles (3, 9),

– the annular pole of the outer casing (10) is assembled with said reinforced zone of inner casing (8),

– and in that one causes said assembly to be collared by circumferential reinforcements (12).

7. Process according to claim 4, characterised in that use is made of a connecting strut (2) consisting of a balloon of elongated form and possessing a pole (4) attached to the article and a pole (3) common with the common poles of inner casing (8) and outer casing (10).

8. Process according to claim 7, characterised in that use is made of a connecting balloon (2) of elongated cylindrical form having a high strength generatrix and provided with a network of circumferential reinforcements (5).

9. Process according to one of claims 7 to 8, characterised in that use is made of a connecting balloon (2) having an interpolar link (7) extending axially between poles (3, 4) off said balloon and in that one inflates this balloon until its casing bursts.

10. Process according to claim 4, characterised in that one attaches, after inflation of outer casing (10), a hermetic polar piece (17) at the level of the open annular pole of said outer casing and in that one destroys inner casing (8) in its entirety.

11. Process according to claim 4, characterised in that use is made of a twin-walled outer casing (10) and in that, following inflation of said casing, one injects a solidifying foam into the space between said walls so as to create a rigid structure about article (1).

12. Process according to claims 9, 10 and 11 jointly, characterised in that it consists in arranging rigid struts capable of working in compression and in tension between article (1) and the poles of outer casing (10), following destruction of connecting balloon (2) and of the inner casing (8) and after rigidification of the outer casing.

13. Process according to one of the preceding claims, characterised in that it consists in developing a casing about an article in orbital phase.

14. Device intended to be firmly attached to an article (1) in order to implement the process according to one of the preceding claims and characterised in that it comprises a container (13) which is to be firmly attached to said article (1) and comprises:

– a connecting strut (2), one end of which is firmly attached to the container and capable of taking up two extreme positions:

. a folded position in which it is folded into the inside of container (13),

. an extended condition· in which it extends to the outside of container (13),

– a first cylindrical casing (8), the so-called inner casing, which has a pole (9) firmly attached to container (13) and a pole (3) firmly attached to thee end of connecting strut (2), said inner casing being folded in zigzag form within the container, in a turned up position,

– a second casing (10), the so-called outer casing which is partly passed about the inner casing (8) prior to folding of the latter and which has an open annular pole firmly attached to the peripheral wall of said inner casing as well as a pole (3) firmly attached to the end of connecting strut (2),

– means for inflation suitable for enabling step-by-step inflation of inner casing (8) and outer casing (10).

15. Device according to claim 14, characterised in that connecting strut (2) consists of a balloon of generally elongated, substantially cylindrical form, surrounded by a network of circumferential reinforcements (5).

16. Device according to claim 15, characterised in that the means for inflation comprise:

– supply means enabling step-by-step inflation of connecting balloon (2) as well as of inner casing (8) and outer casing (10),

– means for controlling the relative pressure of connecting balloon (2) suitable for stopping the inflation of said balloon and regulating the inflation of inner casing (8) to a relative pressure of connecting balloon (2), which is higher than a given set value.

17. Device according to one of claims 14, 15 or 16, comprising an inner casing (8) of cylindrical form and surrounded by a network of circumferential reinforcements (15), said inner casing having a circumferential reinforcing zone (11) at a distance from its poles (3, 9) so as to enable attachment of the annular pole of outer casing (10).

18. Device according to one of claims 14, 15, 16 or 17, characterised in that it comprises an outer casing (10) having two external walls.

**Patentansprüche**

1. Verfahren zur Entfaltung einer dichten Hülle um ein Objekt (1), dadurch gekennzeichnet, daß es in den folgenden Stufen besteht:

(a) in einer Vorstufe:

– im Umhüllen des Objekts (1) mit einer dichten Hülle (8), die sich im nicht aufgeblasenen Zustand befindet,

– im Verbinden einer als Pol bezeichneten Zone (9) der besagten Hülle mit dem Objekt, und zwar unter Zwischenschaltung einer Verbindungsstrebe (2), die zwei Endlagen annehmen kann:

. eine zusammengefaltete Lage, in der sie Pol (9) der Hülle (8) im wesentlichen gegen Objekt (1) hält,

. eine gestreckte Lage, in der sie Pol (9) der Hülle (8) von Objekt (1) fernhält,

. wobei sich besagte Verbindungsstrebe (2) anfänglich in ihrer zusammengefalteten Lage befindet, (b) in einer späteren Stufe der Entfaltung:

. im Bewirken des gestreckten Zustands der Strebe (2) zwischen ihrer zusammengefalteten und ihrer gestreckten Lage,

. im Aufblasen der Hülle (8) bis zur Erzielung ihres gefüllten Zustands.

2. Verfahren nach Anspruch 1, dadurch gekennzeichnet, daß es in der Vorstufe darin besteht,

. daß eine Hülle (8), die sogenannte Innenhülle, länglicher Form mit zwei Polen (3, 9) gegenüberliegend an jedem seiner Enden verwendet, die besagte Hülle auf sich selbst aufgerollt und in dieser aufgerollten Lage in Zickzackform der Länge nach gefaltet wird,

. daß Pol (9) der Innenhülle innerhalb des aufgerollten Teils fest mit Objekt (1) verbunden und der andere Pol (3) der Hülle (8) des besagten Objekts mit Hilfe einer Verbindungsstrebe (2) angeschlossen wird, deren Länge geringer ist als die der besagten Hülle, während sich die besagte Verbindungsstrebe in ihrer gefalteten Lage befindet.

3. Verfahren nach Anspruch 2, dadurch gekennzeichnet, daß von einer Innenhülle (8) allgemein länglicher zylindrischer Form Gebrauch gemacht wird, deren Querschnitt größer ist als der des Objekts, so da sie entlang des besagten Objekts (1) verschoben werden kann.

4. Verfahren nach Anspruch 3, dadurch gekennzeichnet, daß es in folgenden Stufen besteht:

(a) in der Vorstufe:

– in der Verwendung einer zweiten Hülle (10), der sogenannten Außenhülle, deren Volumen größer ist als das der Innenhülle und die zwei Pole an jedem ihrer Enden hat, wobei einer der besagten Pole offen und ringförmig ist,

– im teilweisen Aufschieben, während sie gefaltet wird, der Außenhülle (10) um die Innenhülle (8) vor Faltung der letzteren, so daß der ringförmige Pol der besagten Außenhülle (10) am Umfang der Innenhülle (8) in einem Abstand von deren Polen (3, 9) befestigt wird, wobei der andere Pol der Außenhülle mit Pol (3) der Innenhülle (8), die an Verbindungsstrebe (2) zu befestigen ist, gemein ist,

– im Aufrollen und danach gemeinsamem Längsfalten in Zickzackform der beiden auf diese Weise verbundenen Hüllen (8, 10),

– im festen Verbinden eines der Pole (9) der Innenhülle mit dem Objekt und

– im Anschließen des gemeinsamen Pols (3) der Innenhülle (8) und der Außenhülle (10) mit dem besagten Objekt unter Zwischenschaltung der Verbindungsstrebe (2) in deren gefalteter Lage,

(b) in der Entfaltungsstufe:

. im Bewirken des gestreckten Zustands der Verbindungsstrebe (2),

. im Aufblasen der Innenhülle (8) bis zu deren gefülltem Zustand, in dem sie um Objekt (1) herum entfaltet ist,

. im Fortsetzen des Aufblasvorgangs, bis die periphere Außenwand der Innenhülle (8) platzt,

. im Aufblasen der Außenhülle (10) bis zu deren gefülltem Zustand.

5. Verfahren nach Anspruch 4, dadurch gekennzeichnet, daß von einer Innenhülle (8) zylindrischer Form Gebrauch gemacht wird, die von einem Netzwerk von Umfangsverstärkungen (15) umgeben ist, die so entlang der Höhe der besagten Innenhülle verteilt sind, daß sie ihr eine Struktur von Ausbauchungen vermitteln, wobei das Platzen der besagten Hülle durch Riß von Ausbauchungen zwischen den Umfangsverstärkungen (15) bewirkt wird.

6. Verfahren nach einem der Ansprüche 4 oder 5, dadurch gekennzeichnet,
- daß von einer Innenhülle (8) mit einer peripher verstärkten Zone (11) im Abstand von ihren Polen (3, 9) Gebrauch gemacht wird,
- daß der ringförmige Pol der Außenhülle (10) mit der besagten verstärkten Zone der Innenhülle (8) verbunden wird,
- und daß eine Umschnürung der besagten Baugruppe durch Umfangsverstärkungen (12) bewirkt wird.

7. Verfahren nach Anspruch 4, dadurch gekennzeichnet, da man von einer Verbindungsstrebe (2) Gebrauch macht, die aus einem länglichen Ballon besteht und einen an dem Objekt befestigten Pol (4) sowie einen mit den gemeinsamen Polen (3) der Innenhülle (8) und der Außenhülle (10) gemeinen Pol besitzt.

8. Verfahren nach Anspruch 7, dadurch gekennzeichnet, da man von einem Verbindungsballon (2) von länglicher zylindrischer Form Gebrauch macht, der eine Mantellinie hoher Festigkeit besitzt und mit einem Netzwerk von Umfangsverstärkungen (5) versehen ist.

9. Verfahren nach einem der Ansprüche 7 oder 8, dadurch gekennzeichnet, da man von einem Verbindungsballon (2) mit einem Zwischenpolband (7) Gebrauch macht, das sich axial zwischen den Polen (3, 4) des besagten Ballons erstreckt, sowie dadurch, da man diesen Ballon aufbläst, bis seine Hülle platzt.

10. Verfahren nach Anspruch 4, dadurch gekennzeichnet, da man nach dem Aufblasen der Außenhülle (10) ein hermetisches Polstück (17) in Höhe des offenen ringförmigen Pols der besagten Außenhülle anbringt und die Innenhülle (8) vollkommen vernichtet.

11. Verfahren nach Anspruch 4, dadurch gekennzeichnet, daß man von einer Außenhülle (10) mit Doppelwand Gebrauch macht und nach Aufblasen der besagten Hülle einen steifwerdenden Schaum in den Raum zwischen den besagten Wänden einspritzt, so da rings um Objekt (1) eine starre Struktur gebildet wird.

12. Verfahren nach den Ansprüchen 9, 10 und 11 gemeinsam, dadurch gekennzeichnet, daß nach Zerstörung des Verbindungsballons (2) und der Innenhülle (8) und nach Versteifung der Außenhülle zwischen Objekt (1) und den Polen der Außenhülle (10) starre Streben montiert werden, die unter Druck und unter Zug wirksam sind.

13. Verfahren nach einem der vorstehenden Ansprüche, dadurch gekennzeichnet, daß es in der Entfaltung einer Hülle rings um ein in Umlaufphase befindliches Objekt besteht.

14. Vorrichtung für feste Verbindung mit einem Objekt (1) zwecks Durchführung des Verfahrens nach einem der vorstehenden Ansprüche und dadurch gekennzeichnet, daß es einen Behälter (13) umfaßt, der mit besagtem Objekt (1) fest zu verbinden ist, mit:
- einer Verbindungsstrebe (2), die ein mit dem Behälter fest verbundenes Ende (4) besitzt und die folgenden zwei Endlagen annehmen kann:
. eine zusammengefaltete Lage, in der sie innerhalb des Behälters (13) zusammengefaltet ist,
. eine gestreckte Lage, in der sie sich außerhalb des Behälters (13) erstreckt,
- einer ersten zylindrischen Hülle (8), der sogenannten Innenhülle, die einen mit dem Behälter (13) fest verbundenen Pol (9) und einen mit dem Ende der Verbindungsstrebe (2) fest verbundenen Pol (3) umfaßt, wobei die besagte Innenhülle in Zickzackform innerhalb des Behälters und in aufgerollter Lage zusammengefaltet ist,
- einer zweiten Hülle (10), der sogenannten Außenhülle, die teilweise um die Innenhülle (8) aufgeschoben ist, bevor die besagte Innenhülle gefaltet wird, und die einen offenen ringförmigen Pol besitzt, der mit der peripheren Wand der besagten Innenhülle fest verbunden ist, sowie einem Pol (3), der mit dem Ende der Verbindungsstrebe (2) fest verbunden ist,
- Aufblasmitteln für allmähliches Aufblasen der Innenhülle (8) und der Außenhülle (10).

15. Vorrichtung nach Anspruch 14, dadurch gekennzeichnet, daß die Verbindungsstrebe (2) in einem Ballon allgemein länglicher und im wesentlichen zylindrischer Form besteht, der von einem Netzwerk von Umfangsverstärkungen (5) umgeben ist.

16. Vorrichtung nach Anspruch 15, dadurch gekennzeichnet, daß die Aufblasmittel folgende Teile umfassen:
- Zuleitmittel, die allmähliches Aufblasen des Verbindungsballons (2) sowie der Innenhülle (8) und der Außenhülle (10) gestatten,
- Mittel zur Regelung des relativen Drucks im Verbindungsballon (2), die so beschaffen sind, daß sie das Aufblasen des besagten Ballons unterbrechen und das Aufblasen der Innenhülle (8) steuern, zwecks Erzielung eines relativen Druckes des Verbindungsballons (2), der höher ist als ein vorgegebener Solldruck.

17. Vorrichtung nach einem der Ansprüche 14, 15 oder 16, mit einer Innenhülle (8) zylindrischer Form, die von einem Netzwerk von Umfangsverstärkungen (15) umgeben ist, wobei die besagte Innenhülle im Abstand von ihren Polen (3, 9) eine periphere Verstärkungszone (11) umfaßt, so daß Befestigung des ringförmigen Pols der Außenhülle (10) möglich ist.

18. Vorrichtung nach einem der Ansprüche 14, 15, 16 oder 17, dadurch gekennzeichnet, daß sie eine Außenhülle (10) mit zwei Außenwänden umfaßt.

Fig. 1a

Fig. 1b

Fig. 1c

Fig. 2

Fig. 3

Fig. 4

Fig. 5

EP 0 241 970 B1

Fig. 6

Fig. 7

EP 0 241 970 B1